# EUROPEAN PATENT APPLICATION

(11) **EP 4 459 740 A1**
(43) Date of publication of application: **06.11.2024**
(21) Application number: 23907277.0
(22) Date of filing: 16.08.2023
(51) Int. Cl.: H01M 10/48, H01M 50/519, H01M 10/42, H01M 10/04, H01M 50/209, H01M 50/213

(54) **BATTERY MODULE**

(30) Priority: 23.12.2022 KR 20220183528; 16.06.2023 KR 20230077754
(71) Applicant: LG Energy Solution, Ltd., Seoul 07335 (KR)
(72) Inventor: CHO, Seong-Eun, Daejeon 34122 (KR); PARK, Sung-Kyu, Daejeon 34122 (KR)
(74) Representative: Plasseraud IP
(86) International application number: PCT/KR2023/012126
(87) International publication number: WO 2024/135987

(57) **Abstract**

A battery module is disclosed. The battery module according to an embodiment of the present disclosure includes a case including a base plate and a side wall protruding upwards from the base plate, and providing an internal space; a plurality of battery cells received in the case, and arranged along the side wall; a flexible printed circuit board (FPCB) disposed between any one of the plurality of battery cells and the side wall, and having a surface facing the side wall; and a temperature sensor disposed on the surface of the FPCB.

## Description

### TECHNICAL FIELD

The present disclosure relates to a battery module.

The present application claims priority to Korean Patent Application No. 10-2022-0183528 filed on December 23, 2022 and Korean Patent Application No. 10-2023-0077754 filed on June 16, 2023 in the Republic of Korea, the disclosures of which are incorporated herein by reference.

### BACKGROUND ART

With a rapid increase in demand for portable electronic products such as laptop computers, video cameras, mobile phones and so on and the widespread use of robots, electric vehicles and so on, many studies are being made on high performance secondary batteries that can be recharged repeatedly.

Commercially available secondary batteries include nickel-cadmium batteries, nickel-hydrogen batteries, nickel-zinc batteries, lithium secondary batteries and so on, and among them, lithium secondary batteries have little or no memory effect, and thus they are gaining more attention than nickel-based secondary batteries for their advantages that recharging can be done whenever it is convenient, the self-discharge rate is very low and the energy density is high.

In general, lithium secondary batteries may be classified into cylindrical secondary batteries in which an electrode assembly is included in a metal can and pouch-type secondary batteries in which an electrode assembly is included in a pouch of an aluminum laminate sheet, according to the shape of an outer packaging.

When there is a plurality of battery cells, it is important to monitor the temperature of the battery cells. This is to achieve proper control based on the monitored temperature in order to prevent the plurality of battery cells from overheating. Accordingly, there is a need for a structure for increasing accuracy in temperature measurement of the plurality of battery cells.

### SUMMARY

### Technical Problem

The present disclosure is designed to solve these and other problems.

The present disclosure is directed to providing a battery module including a structure for improving assemblability of a flexible printed circuit board (FPCB) including a temperature sensor.

The present disclosure is further directed to providing a battery module including a structure for bringing a temperature sensor into close contact with a battery cell while preventing damage to the temperature sensor.

### Technical Solution

To achieve the above-described objective, a battery module according to an embodiment of the present disclosure includes a case including a base plate and a side wall protruding upwards from the base plate, and providing an internal space; a plurality of battery cells received in the case, and arranged along the side wall; a flexible printed circuit board (FPCB) disposed between any one of the plurality of battery cells and the side wall, and having a surface facing the side wall; and a temperature sensor disposed on the surface of the FPCB.

Additionally, the battery module may further include a pad having a compression property between the FPCB and the side wall.

Additionally, the plurality of battery cells may have a cylindrical shape extending in a vertical direction, and a portion of the side wall facing the FPCB may have a curved surface along a side of the battery cell facing the FPCB.

Additionally, the pad may be attached to the surface of the FPCB.

Additionally, the pad may be made of polyurethane.

Additionally, the side wall may include a groove in which at least a portion of the pad is received.

Additionally, the pad may include an accommodation portion in which the temperature sensor is received.

Additionally, the pad may include a portion having a decreasing cross section as it goes downwards.

Additionally, the battery module may further include a main FPCB extending along the side wall, and the FPCB may extend and bend from the main FPCB.

To achieve the above-described objective, a battery pack according to an embodiment of the present disclosure includes the battery module according to the present disclosure.

To achieve the above-described objective, a vehicle according to an embodiment of the present disclosure includes the battery module according to the present disclosure.

### Advantageous Effects

According to at least one of the embodiments of the present disclosure, it may be possible to provide the battery module including the structure for improving assemblability of the flexible printed circuit board (FPCB) including the temperature sensor.

According to at least one of the embodiments of the present disclosure, it may be possible to provide the battery module including the structure for bringing the temperature sensor into close contact with the battery cell while preventing damage to the temperature sensor.

The present disclosure may have many other effects, and these effects will be described in each embodiment, or regarding effects that can be easily anticipated by those skilled in the art, the corresponding description is omitted.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 shows a battery module according to an embodiment of the present disclosure.
FIG. 2 is a diagram of the battery module of FIG. 1 when viewed from a different direction.
FIG. 3 is a partial exploded view of a battery module according to an embodiment of the present disclosure.
FIG. 4 is an exploded view of a flexible printed circuit board (FPCB) of a battery module according to an embodiment of the present disclosure.
FIG. 5 is a diagram showing a FPCB of a battery module according to an embodiment of the present disclosure.
FIG. 6 is a cross-sectional view of FIG. 5, taken along the line C-C'.
FIG. 7 is a diagram showing a variation of a FPCB of a battery module according to an embodiment of the present disclosure.
FIG. 8 is an enlarged view of section D in FIG. 3.
FIG. 9 is a cross-sectional view of FIG. 3, taken along the line B-B'.
FIG. 10 is an enlarged view of section E in FIG. 1.
FIG. 11 is a cross-sectional view of FIG. 1, taken along the line A-A'.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation.

Therefore, the embodiments described herein and the illustrations shown in the drawings are exemplary embodiments of the present disclosure to describe the technical aspect of the present disclosure and are not intended to be limiting, so it should be understood that a variety of other equivalents and modifications could have been made thereto at the time that the application was filed.

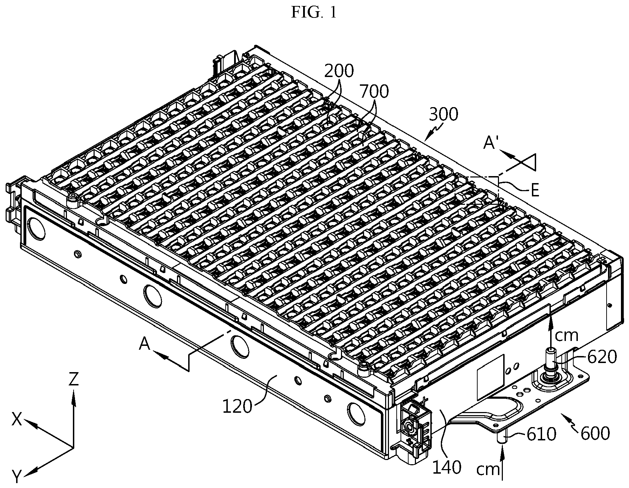

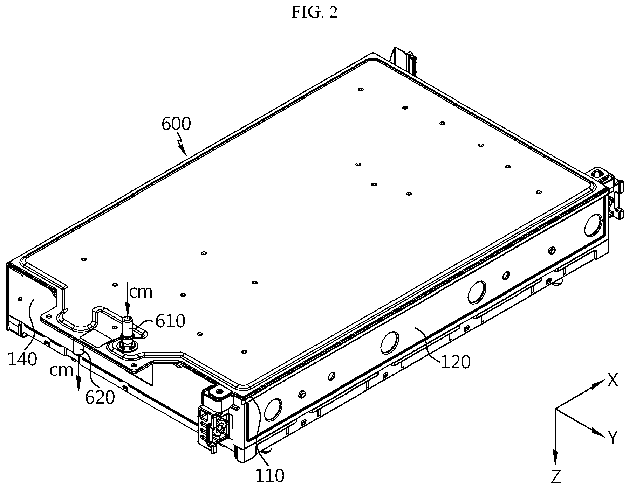

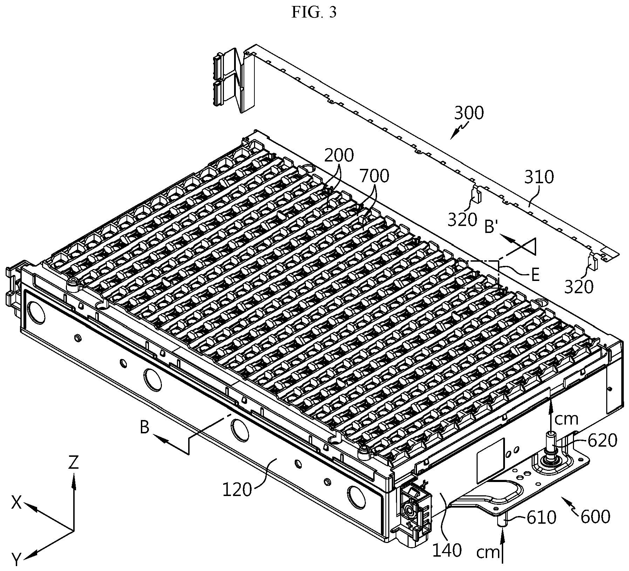

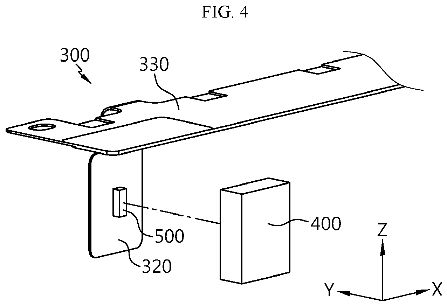

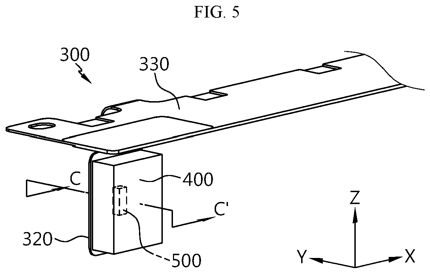

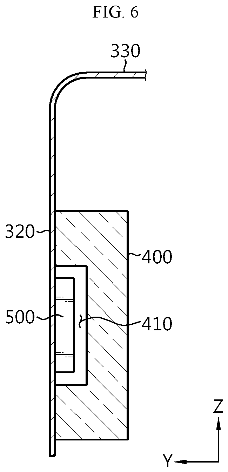

FIG. 1 shows a battery module according to an embodiment of the present disclosure. FIG. 2 is a diagram of the battery module of FIG. 1 when viewed from a different direction. FIG. 3 is a partial exploded view of the battery module according to an embodiment of the present disclosure. FIG. 4 is an exploded view of a flexible printed circuit board (FPCB) 300 of the battery module according to an embodiment of the present disclosure. FIG. 5 is a diagram showing the FPCB 300 of the battery module according to an embodiment of the present disclosure. FIG. 6 is a cross-sectional view of FIG. 5, taken along the line C-C'. Referring to FIGS. 1 to 6, the battery module according to an embodiment of the present disclosure may include a case 100, a plurality of battery cells 200, the FPCB 300 and a temperature sensor 500.

The case 100 may have an internal space. The case 100 may include a base plate 110, a side wall 120, a front wall 130 and a rear wall 140. The base plate 110 may be a plate of a rectangular shape. The side wall 120 may protrude in +Z axis direction or upward direction from the base plate 110. The front wall 130 may protrude in +Z axis direction or upward direction from the base plate 110. The rear wall 140 may protrude in +Z axis direction or upward direction from the base plate 110. The front wall 130, the rear wall 140 and the side wall 120 may be integrally formed with or connected to one another. The case 100 may further include a top plate. The top plate may cover the internal space. The top plate may be integrally formed with or connected or coupled to the front wall 130, the rear wall 140 and the side wall 120.

The plurality of battery cells 200 may be received in the case 100. The plurality of battery cells 200 may refer to secondary batteries. The plurality of battery cells 200 may be cylindrical battery cells 200. Alternatively, each of the plurality of battery cells 200 may have a cylindrical shape. The plurality of battery cells 200 may be arranged in column. Additionally, the plurality of battery cells 200 may be arranged along the lengthwise direction of the side wall 120, the front wall 130 or the rear wall 140.

There may be a FPCB 320 located between any one of the plurality of battery cells 200 and the side wall 120. In this instance, the FPCB may be referred to as a sub FPCB 320. The sub FPCB 320 may have a surface facing the side wall 120. The other surface of the sub FPCB 320 may face a side of the battery cell 200. The sub FPCB 320 may include a plurality of sub FPCBs 320.

The temperature sensor 500 may be disposed on one surface of the sub FPCB 320. The sub FPCB 320 may include a plurality of sub FPCBs 320, and the temperature sensor 500 may be disposed at each of the sub FPCBs 320. For example, the sub FPCB 320 may include two sub FPCBs 320, and the temperature sensor 500 may be disposed at each of the two sub FPCBs 320.

According to the above-described configuration of the present disclosure, since the temperature sensor 500 is disposed at the sub FPCB 320, the temperature sensor 500 may come into close contact with the side 201 of the battery cell 200. The side 201 of the battery cell 200 has a curved surface, and the temperature sensor 500 is disposed at the sub FPCB 320, so the temperature sensor 500 may easily come into close contact with the curved surface.

Referring to FIGS. 1 to 6, the battery module according to an embodiment of the present disclosure may include a heat sink 600. The heat sink 600 may be in the shape of rectangular plate. The heat sink 600 may come into contact with or be fixed, fastened or coupled to the lower surface of the base plate 110. Alternatively, the heat sink 600 may act as the base plate 110. The heat sink 600 may have an inlet port 610 and an outlet port 620. A cooling medium (cm) may enter the inlet port 610, pass through a flow path inside the heat sink 600 and exit the outlet port 620. In this instance, to stably control the battery module, it is necessary to measure the highest temperature in the plurality of battery cells 200. The plurality of temperature sensors 500 may be disposed at an expected location at which the highest temperature in the plurality of battery cells 200 will occur. Since the temperature of the cooling medium (cm) passing through the heat sink 600 continuously changes while the cooling medium (cm) is moving along the flow path, a temperature difference between the plurality of battery cells 200 may occur.

Referring to FIGS. 1 to 6, the battery module according to an embodiment of the present disclosure may further include a main FPCB 310 extending along the side wall 120, and the sub FPCB 320 may extend and bend from the main FPCB 310. The main FPCB 310 and the sub FPCB 320 may be collectively referred to the FPCB 300. The main FPCB 310 and the sub FPCB 320 may be integrally formed with each other. The FPCB 300 may further include a connection portion 330 physically and electrically connecting the main FPCB 310 to the sub FPCB 320.

According to the above-described configuration of the present disclosure, since the temperature sensor 500 is disposed at the sub FPCB 320, sub FPCB 320 may easily bend and be assembled or fastened to the battery module. Accordingly, it may be possible to improve assemblability and productivity of the battery module.

Referring to FIGS. 1 to 6, the battery module according to an embodiment of the present disclosure may further include a pad 400 having a compression property between the sub FPCB 320 and the side wall 120. The pad 400 may be made of a material having the ability to be compressed under applied pressure and restore to its original shape after being compressed. The pad 400 may be fixed and compressed between the sub FPCB 320 and the side wall 120. The pad 400 may guide the sub FPCB 320 to form a curved surface. The pad 400 may bend the sub FPCB 320 to bring the sub FPCB 320 into close contact with the curved surface of the side 201 of the battery cell 200.

According to the above-described configuration of the present disclosure, the temperature sensor 500 may come into surface contact or close contact with the curved surface of the side 201 of the cell. Accordingly, it may be possible to improve accuracy of the temperature sensor 500 and accuracy in battery module control.

Referring to FIGS. 1 to 6, the pad 400 of the battery module according to an embodiment of the present disclosure may be attached to one surface of the sub FPCB 320. The temperature sensor 500 may be disposed on one surface of the sub FPCB 320 and the pad 400 may be attached thereto. In this instance, the pad 400 may be configured to maintain the compressibility of about 50% to prevent damage to the temperature sensor 500. Additionally, the applied pressure to the temperature sensor 500 by the pad 400 may be lower than a limit pressure at which temperature sensor 500 normally operates.

According to the above-described configuration of the present disclosure, the temperature sensor 500 may come into close contact with the curved surface of the side 201 of the cell without damage caused by the pressure of the pad 400.

Referring to FIGS. 1 to 6, the pad 400 of the battery module according to an embodiment of the present disclosure may be made of polyurethane.

According to the above-described configuration of the present disclosure, the temperature sensor 500 may come into surface contact or close contact with the curved surface of the side 201 of the cell. Accordingly, it may be possible to improve accuracy of the temperature sensor 500 and accuracy in battery module control.

Referring to FIGS. 1 to 6, the pad 400 of the battery module according to an embodiment of the present disclosure may include an accommodation portion 410 in which the temperature sensor 500 is received.

According to the above-described configuration of the present disclosure, since the temperature sensor 500 is received in the accommodation portion 410, the temperature sensor 500 may not be subjected to pressure from the pad 400 when the pad 400 is compressed. Accordingly, the function of the temperature sensor 500 may be stably maintained.

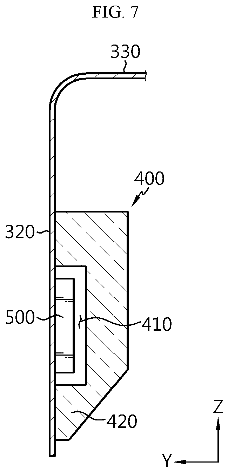

FIG. 7 is a diagram showing a variation of the FPCB 300 of the battery module according to an embodiment of the present disclosure. Referring to FIG. 7, the pad 400 of the battery module according to an embodiment of the present disclosure may include a portion having a decreasing cross section as it goes toward -Z axis direction or downward direction. Alternatively, the pad may include a downward sloping portion.

According to the above-described configuration of the present disclosure, it may be easy to assemble or couple the FPCB 300. The FPCB 300 may be assembled or fastened by inserting or interposing it between the side wall 120 and the battery cell 200. Accordingly, since a portion of the pad 400 where the insertion starts has a small cross section, the FPCB 300 may be easily inserted or interposed between the side wall 120 and the battery cell 200.

Referring to FIGS. 1 to 6, the battery module according to an embodiment of the present disclosure may include a plurality of busbars 700. Each of the plurality of busbars 700 may be electrically connected to the plurality of battery cells 200. Additionally, the main FPCB 310 may have a plurality of terminals 340 arranged along the lengthwise direction. The plurality of terminals 340 may be electrically connected to the plurality of busbars 700, respectively.

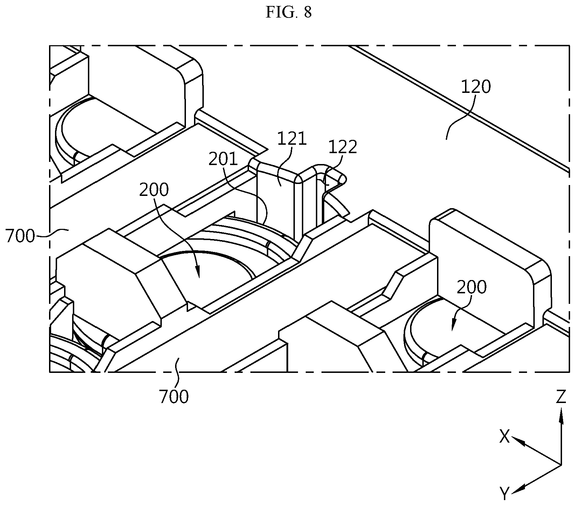

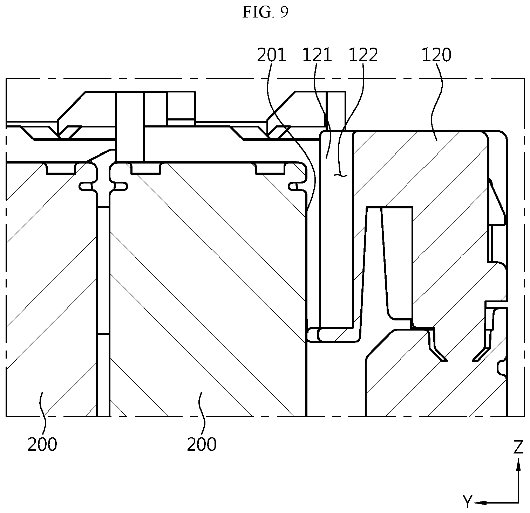

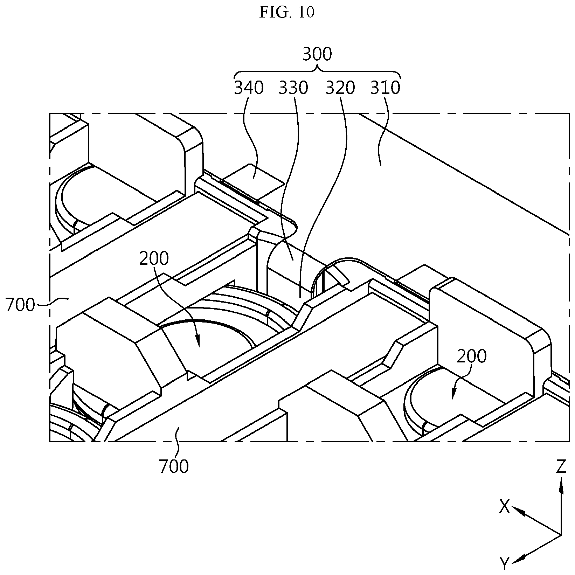

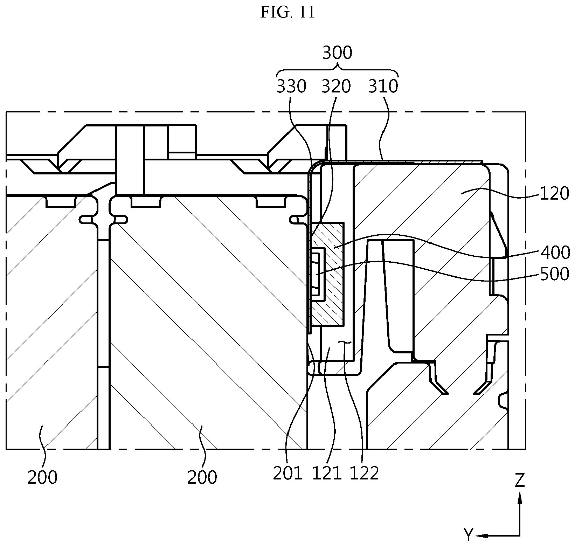

FIG. 8 is an enlarged view of section D in FIG. 3. FIG. 9 is a cross-sectional view of FIG. 3, taken along the line B-B'. FIG. 10 is an enlarged view of section E in FIG. 1. FIG. 11 is a cross-sectional view of FIG. 1, taken along the line A-A'. Referring to FIGS. 8 to 11, the plurality of battery cells 200 of the battery module according to an embodiment of the present disclosure may have a cylindrical shape extending in the vertical direction, and a portion of the side wall 120 facing the sub FPCB 320 may have a curved surface along the side 201 of the battery cell 200 facing the sub FPCB 320.

The side wall 120 may have the curved surface 121 having the curvature that is similar or substantially equal to the side 201 of the cylindrical battery cell 200.

According to the above-described configuration of the present disclosure, the side wall 120 may bend or guide the sub FPCB 320 to bring the sub FPCB 320 into surface contact or close contact with the side 201 of the cylindrical battery cell 200.

Referring to FIGS. 8 to 11, the side wall 120 of the battery module according to an embodiment of the present disclosure may include a groove in which at least a portion of the pad 400 is received. The groove may be formed in the vertical direction or Z axis direction. At least the portion of the pad 400 may be compressed and received in the groove.

According to the above-described configuration of the present disclosure, when the pad 400 is received in the groove, the pressure applied to the temperature sensor 500 by the pad 400 may be mitigated. Accordingly, it may be possible to prevent damage to the temperature sensor 500, and improve safety in battery module control.

A battery pack according to the present disclosure may include the battery module according to the present disclosure. Additionally, in addition to the battery module according to the present disclosure, the battery pack according to the present disclosure may further include a variety of other components, for example, components of the battery pack known at the time that the application was filed, such as a battery management system (BMS) or the busbar, the pack case 100, a relay, a current sensor and so on.

A vehicle according to the present disclosure may include the battery module according to the present disclosure. The battery module according to the present disclosure may be used in a vehicle such as an electric vehicle or a hybrid electric vehicle. Additionally, in addition to the battery module, the vehicle according to the present disclosure may further include any other components included in the vehicle, for example, a vehicle body, a motor, a control device such as an electronic control unit (ECU) and so on.

## Claims

1. A battery module, comprising:
a case including a base plate and a side wall protruding upwards from the base plate, and providing an internal space;
a plurality of battery cells received in the case, and arranged along the side wall;
a flexible printed circuit board (FPCB) disposed between any one of the plurality of battery cells and the side wall, and having a surface facing the side wall; and
a temperature sensor disposed on the surface of the FPCB.

2. The battery module according to claim 1, further comprising:
a pad having a compression property between the FPCB and the side wall.

3. The battery module according to claim 1, wherein the plurality of battery cells has a cylindrical shape extending in a vertical direction, and
wherein a portion of the side wall facing the FPCB has a curved surface along a side of the battery cell facing the FPCB.

4. The battery module according to claim 2, wherein the pad is attached to the surface of the FPCB.

5. The battery module according to claim 2, wherein the pad is made of polyurethane.

6. The battery module according to claim 2, wherein the side wall includes a groove in which at least a portion of the pad is received.

7. The battery module according to claim 2, wherein the pad includes an accommodation portion in which the temperature sensor is received.

8. The battery module according to claim 2, wherein the pad includes a portion having a decreasing cross section as it goes downwards.

9. The battery module according to claim 1, further comprising:
a main FPCB extending along the side wall,
wherein the FPCB extends and bends from the main FPCB.

10. A battery pack comprising the battery module according to any one of claims 1 to 9.

11. A vehicle comprising the battery module according to any one of claims 1 to 9.
